# EUROPEAN PATENT SPECIFICATION

(11) **EP 1 777 446 B1**
(45) Date of publication and mention of the grant of the patent: **20.08.2008**
(21) Application number: 06025068.5
(22) Date of filing: 09.06.2005
(51) Int. Cl.: F16J 15/32

(54) **Lip-type end-face sealing device**
Wellendichtring
Joint d'étanchéité de roulement

(30) Priority: 09.07.2004 JP 2004202684
(43) Date of publication of application: 25.04.2007
(62) Divisional of application: 05012400.7
(73) Proprietor: Carl Freudenberg KG, 69469 Weinheim (DE)
(72) Inventor: Nakagawa, Takehiro, Fukushima-shi, Fukushima 960-1193 (JP); Tasaki, Tetsuo, Fukushima-shi, Fukushima 960-1193 (JP); Takahashi, Hiromi, Fukushima-shi, Fukushima 960-1193 (JP); Sato, Akihiro, Fukushima-shi, Fukushima 960-1193 (JP); Hoshi, Junya, Fukushima-shi, Fukushima 960-1193 (JP); Okubo, Hiroshi, Fukushima-shi, Fukushima 960-1193 (JP)

(56) References cited:
- DE-C1- 19 841 099
- US-A- 5 653 448
- US-B1- 6 257 587
- PATENT ABSTRACTS OF JAPAN vol. 2003, no. 12, 5 December 2003 (2003-12-05) & JP 2003 287142 A (NOK CORP), 10 October 2003 (2003-10-10)

## Description

### BACKGROUND OF THE INVENTION

### Field of the Invention

The present invention relates to a lip-type end face sealing device having seal lips adapted to be made into close contact with an end face so as to effect sealing, according to the preamble of claim 1.

### Description of the Related Art

For example, Japanese Utility Model Laid-Open No. H06-49856 (which will be referred to as "patent document 1 ") discloses a typical conventional technology relating to a sealing device for sealing between an engine oil and a clutch oil in an wet-type engine.

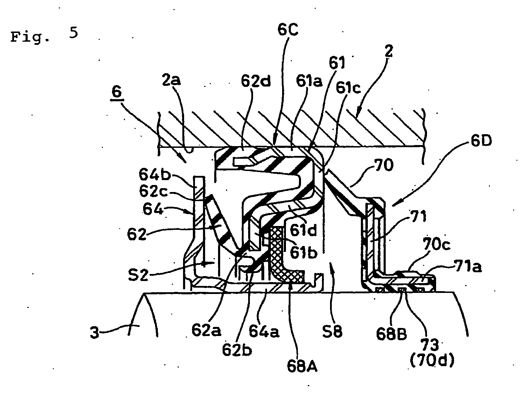

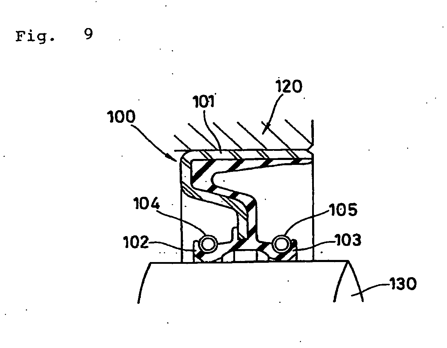

Fig. 9 is a partly sectioned view which shows a conventional sealing device 100 similar to that disclosed in Fig. 5 in the patent document 1. That is, this sealing device 100 has a pair of radial seal lips 102, 103 in an annular metal case 101 press-fitted in an inner circumferential surface of a housing 120, which are made of a rubber-like elastic material and facing in axially opposite directions from each other, and extension springs 104, 105 fitted on the outer circumferences thereof, for applying a urging force to a rotary shaft 130. The first radial seal lip 102 is adapted to seal engine oil and the second radial seal lip 103 is adapted to seal clutch oil.

However, the sealing device 100 shown in Fig. 9 has a sealing service life which is not so long since the radial seal lips 102, 103 are worn being caused by the urging force applied to the rotary shaft 130. Further, should the sealing device be fitted being slightly eccentric from the rotary shaft 130, the slide surface pressures of the seal lips 102, 103 against the rotary shaft 130 would be locally decreased or gaps would be caused, resulting in a risk of mixing of different kinds of liquids which are held on axially opposite sides. Further, in the case of externally fitting the sealing device on the rotary shaft 130, close attention should be taken in order to prevent the radial seal lips 103, 103 from being damaged.

Further, in view of the above-mentioned standpoints, these years, there has been presented such a tendency that an end face sealing type end face sealing device is alternatively be used, having seal lips which are made into slide contact with end faces of slingers perpendicular to the center axis of the rotary shaft, as shown in Fig. 1 in the patent document 1. However, in the case of the end face sealing type, negative pressure is induced in an inner sealing space enclosed by the sliding parts of both seal lips under a centrifugal force during rotation, and accordingly, the seal lips are made into surface-contact with the end face of the slinger, resulting in an increased sliding load. As a result, the sealing ability thereof is deteriorated.

The sealing device disclosed by document JP 2003 287142, corresponding to the preamble of claim 1, may show such a problem.

### SUMMARY OF THE INVENTION

The present invention is devised in view of the above-mentioned problems, and accordingly, a technical task of the present invention is to provide a lip-type end face sealing device which is excellent in sealing ability and durability.

According to the invention stated in claim 1, there is provided a lip type end face sealing device comprising a seal lip integrally incorporated with an annular case fixed in an inner circumferential surface of a housing, and flared in a taper-like fashion toward a liquid to be sealed, a slinger closely fitted on an outer circumference of a rotary shaft inserted in the inner circumference of the housing, and having a flange part made into slidable contact with the seal lip, and a dust cover closely fitted on the outer circumference of the rotary shaft, located on the atmospheric side of the slinger and having an outer circumferential dust lip made into slidable contact with a flange part of the case. According to alternative (i) of claim 1, the dust cover is formed therein with a ventilation passage for releasing a pressure in a seal inner space between sliding parts of the seal lip and the dust lip to the atmosphere, and a dust filter is provided in the ventilation passage. With this configuration, no negative pressure is effected in seal inner spaces between the sliding pars of the seal lip and the slinger and between the sliding parts of the dust lip and the case even though air is expelled therefrom under a centrifugal force exerted to the sliding parts since the pressure in the seal inner spaces is released to the atmosphere through the intermediary of the ventilation passage.

According to the invention stated in claim 2, in the lip type end face sealing device as set forth in alternative (i) of claim 1, the ventilation passage is formed in a slit-like shape piercing trough a rubber layer. That is, a part of the ventilation passage which pierces through the rubber layer in a slit-like shape is normally closed, but is opened when a vacuum is effected in the seal inner space. Thus, the dust filter located on the inner side thereof is prevented from being normally exposed to dust on the outside, and further, entrance of large particles of dust is blocked.

According to the invention stated in claim 3, in the lip type end face sealing device as stated in alternative (i) of claim 1, the ventilation passage extends spirally in the fitting part of the inner circumferential part of the dust cover which is fitted on the rotary shaft. With this configuration, a filtering path length of the dust filter in the ventilation passage can be prolonged.

According to the invention stated in claim 4, in the lip type end face sealing device as set forth in alternative (i) of claim 1, the inner circumferential part of the dust cover is positioned abutting against an end part of the singer on the atmospheric side. With this configuration, the dust cover can be positioned with respect to the slinger when the inner circumferential part of the dust cover abuts against the end part of the slinger on the atmospheric side during the fitting of the sealing device.

According to the invention stated in claim 1, alternative (ii) there is provided a lip type end face sealing device comprising a seal lip integrally incorporated with an annular case fixed in an inner circumferential surface of a housing, and flared in a taper-like fashion toward a liquid to be sealed, a slinger closely fitted on an outer circumference of a rotary shaft inserted in an inner circumference of the housing, and having a flange part made into slidable contact with the seal lip, a dust cover closely fitted on the outer periphery of the rotary shaft, positioned on the atmospheric side of the slinger and having an outer circumferential dust lip made into slidable contact with the case, wherein a pressure in an inner space of the dust cover is released to the outside when the dust lip is separated from the case under a centrifugal force at a rotational speed higher than a predetermined value.

According to the invention stated in claim 1, alternative (iii), there is provided a lip type end face sealing device comprising a seal lip integrally incorporated with an annular case fixed in an inner peripheral surface of a housing, and flared in a taper-like fashion toward a liquid to be sealed, a slinger closely fitted on an outer circumference of a rotary shaft inserted in an inner circumference of the rotary shaft inserted in an inner periphery of the housing, having a flange part made into slidable contact with the seal lip, and a dust cover closely fitted on the outer circumference of the rotary shaft, positioned on the atmospheric side of the slinger and having an outer circumferential dust lip made into slidable contact with the case, wherein at least one of sliding surfaces of the dust lip and the case which are made into slidable contact with each other is roughened. Thus, an unlimited number of labyrinth-like ventilation passages are formed between the case and the dust lip.

With the lip type end face sealing device according to the inventions stated in claims 1 alternative (i) to 4, since the pressure in the seal inner space is released to the atmosphere by way of the ventilation passage, it is possible to prevent occurrence of surface contact of the seal lip and the dust lip, thereby it is possible to maintain an excellent sealing ability for a long time. Further, since no formation of a ventilation hole in the housing side is required, there can be provided a convenient seal structure, and since the air sucked into the seal inner space is filtered through the dust filter, thereby it is possible to prevent dust in the atmosphere from entering into a liquid to be sealed.

With the lip type end face sealing device according to the invention stated in claim 2, since the dust filter is prevented from being normally exposed to outside dust so as to block entrance of large particles of dust, in addition to the advantages of the invention stated in claim 1, it is possible to further enhance the removable function of dust, and clogging of the dust filter can hardly occur.

With the lip type end face sealing device according to the invention stated in claim 3, in addition to the advantage of the invention stated in claim 1, since the filtering path length of the dust filter is prolonged, it is possible to further enhance the removal function of dust.

With the lip type end face sealing device according to the invention stated in claim 4, in addition to the advantage of the invention stated in claim 1, the positioning of the dust cover with respect to the slinger can be simply made.

With the lip type end face sealing device according to the invention stated in claim 1, alternative (ii), since the dust lip is opened under a centrifugal force during rotation so as to release the pressure from the seal inner space, occurrence of surface contact of the seal lip and the dust lip caused by a negative pressure can be prevented, thereby it is possible to maintain an excellent sealing ability for a long time. Further, since no formation of a ventilation hole is required, there can be provided a simple seal structure, and since the air sucked into the seal inner space is filtered by the dust filter, dust in the atmosphere can be prevented from entering into a liquid to be sealed.

With the lip type end face sealing device according to the invention stated in claim 1, alternative (iii), since the pressure in the seal inner space is released through the intermediary of labyrinth gaps formed by the roughening on the sliding part of the dust lip, occurrence of surface contact of the seal lip and the dust lip is prevented, it is possible to maintain an excellent sealing ability for a long time. Further, since no formation of a ventilation hole is required, there can be provided a simple sealing structure, and since the air sucked into the seal inner space is filtered by the labyrinth gaps and the dust filter, dust in the atmosphere can be prevented from entering into a liquid to be sealed.

### BRIEF DESCRIPTION OF THE DRAWINGS

Fig. 1 is a partly sectioned view illustrating a lip type end face sealing device in a first embodiment of the present invention, the lip type end face sealing device being sectioned along a plane passing through the center axis;
Fig. 2 is a partly sectioned view illustrating a variant form of the lip type end face sealing device in the first embodiment, the lip type end face sealing device being sectioned along a plane passing through the center axis;
Fig. 3 is a view as viewed in the direction of the arrow X in Fig. 2;
Fig. 4 is a partly sectioned view illustrating another variant form of the lip type end face sealing device in the first embodiment, the lip type end face sealing device being sectioned along a plane passing through the center axis;
Fig. 5 is a partly sectioned view illustrating further another variant form of the lip type end face sealing device in the first embodiment, the lip type end face sealing device being sectioned along a plane passing through the center axis;
Fig. 6 is a partly sectioned view illustrating a dust cover shown in Fig. 5, the dust cover being sectioned along a plane passing through the center axis;
Fig. 7 is a partly sectioned view illustrating a lip type end face sealing device in a second embodiment of the present invention, the lip type end face sealing device being sectioned along a plane passing through the center axis;
Fig. 8 is a partly sectioned view illustrating a lip type end face sealing device in a third embodiment of the present invention, the lip type end face sealing device being sectioned along a plane passing through the center axis; and
Fig. 9 is a partly sectioned view illustrating a conventional lip type end face sealing device.

### DESCRIPTION OF THE PREFERRED EMBODIMENT

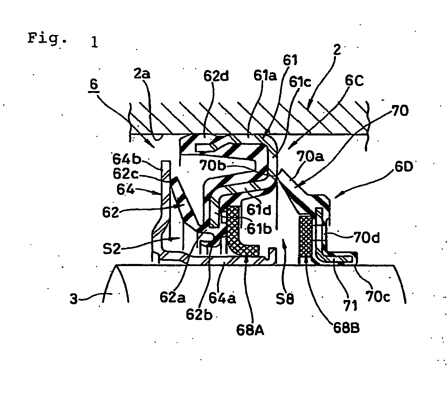

Fig. 1 is a partly sectioned view which shows a lip type end face sealing device in a first embodiment of the present invention, the lip type end face sealing device being sectioned along a plane passing though the center axis.

This lip type end face sealing device 6 is composed of an end face seal 6C and a dust cover 6D. The end face seal 6C comprises an annular case 61 having a fitting cylindrical part 61 a press-fitted in the inner circumferential surface 2a of the housing 2, a seal lip 62 integrally incorporated with the inner circumference of the annular case 61, a slinger 64 fitted on the outer circumferential surface of the crank shaft 3, and a fist dust filter 68A.

The case 61 in the end face seal 6A is press-formed by punching out a metal sheet such as steel sheet, and is composed of a fitting cylindrical part 61 a press-fitted in the inner circumferential surface 2a of the housing 2 in a close contact condition with a predetermined interference, an outer circumferential flange part 61 c extending toward the inner circumference side from the one end of the former, and an inner circumferential flange part 61 b extended from the inner circumference of the former to the inner circumference side by way of an intermediate part 65d extended from the inner periphery of the former toward the crank casing side (on the left side in Fig. 1).

The seal lip 62 in the end face seal 6C is made of a rubber-like material, and is flared in a taper-like fashion, facing toward the crank casing side (on the left side in Fig. 1), and the proximal end part 62a of the seal lip 62 is integrally cured and bonded to the case 61 while the outer circumferential part of the proximal end part 62a is extended around the outer circumference side of the fitting cylindrical part 61 a of the case 61 so as to form a gasket part 62d which is made into close contact with the inner circumferential surface 2a of the housing 2 with a predetermined squeezing margin. Further, the inner circumferential surface of the distal end part 62a is formed therein with a tongue part 62b facing toward the crank casing, and the outer circumferential flange part 61c of the case 61 which faces toward the atmospheric side (on the right side in Fig. 1) is exposed from a rubber layer extending from the proximal end part 62b of the seal lip 62.

The slinger 64 in the end face seal 6C is press-formed by punching out a metal sheet such as a steel sheet, having a fitting cylindrical part 64a and a flange part 64b which is perpendicular to the center axis and with which the seal lip 62 is made into slidable and close contact, being deformed so as to be slightly flared. The sliding surface of the flange part 64b of the slinger 64 which is made into slidable contact with the seal lip 62 may be formed therein with a plurality of spiral grooves which exhibits pumping action for pushing out a fluid toward the outer circumference side upon rotation.

The first dust filter 68A is attached in the inner circumferential part of the end face seal 6A, being positioned on the atmospheric side of the tongue part 62b. This first dust filter 68A is formed of a fiber assembly such as synthetic fiber fabric or cotton, having a permeability due to micro gaps among the fibers, and being made at its inner circumferential part into slidable contact with the outer circu

The dust cover 6D is composed of a dust lip 70 made of a rubber-like elastic material, a reinforcing ring 71 press-formed by punching out a metal sheet such as a steel sheet, and embedded in an inner circumferential proximal end part 70c of the dust lip 70, and a second dust filter 68. The dust lip 70 has a dust lip body 70a which is formed being flared in a taper-like fashion, facing toward the crank casing side (on the left side in Fig. 1), and which has a distal end face 70b made into slidable contact with an end face of the outer circumferential flange part 61 c of the case 61 in the end face seal 6C, being suitably deformed so as to be bent, and the inner circumferential proximal end part 70c is closely fitted on the outer circumferential surface of the crank shaft 3, being position on the atmospheric side of the singer 64.

The rubber layer and the reinforcing ring 71 embedded in the former in the inner circumferential part of the dust lip 70 are formed therein with ventilation holes 70d piercing therethrough at one or more of circumferential positions between the lip body part 70a and the inner circumferential proximal end part 70c in the dust cover 6D (dust lip 70). The ventilation holes 70d are adapted to release pressure in the seal inner spaces S2, S8 between the sliding part of the seal lip 62 in the end face seal 6C and the sliding part of the dust lip 70 in the dust cover 6D to the atmospheric side, and correspond to the ventilation passage stated in claim 6, and are formed at one or more of circumferential positions.

The second dust filter 68B is made of a fiber assembly such as a synthetic fiber fabric or cotton, having a permeability due to micro gaps among the fibers, and is formed in an annular shape. Further, it is secured by an adhesive in the inner circumference side of the dust lip 70 so as to block the ventilation hole 70d.

Accordingly, with the above-mentioned configuration, the end face seal 6C is adapted to prevent engine oil in the crank chamber in the engine from leaking to the outside through the sliding portion between the seal lip 62 and the flange part 64b of the slinger 64, and the dust cover 6D is adapted to prevent dust in the atmosphere from entering into the crank chamber in the engine through the sliding portion between the outer circumferential flange part 61 c of the case 61 and the dust lip 70. It is noted that the tongue part 62b has a function similar to that explained in the first embodiment.

Further, the air presented in the seal inner space S2 in the end face seal 6C is expelled from the sliding portion toward the outer circumference side under a centrifugal force induced by rotation in the sliding portion between the flange part 64b of the slinger 64 and the seal lip 62 or the pumping action by the spiral grooves, and also, the air presented in the seal inner space S8 between the end face seal 6C and the dust seal 6D is expelled toward the outer circumference side under a centrifugal force induced by rotation in the sliding portion of the dust lip 70. Due to this air expelling action, the outside air is sucked into the seal inner space S8 by way of the ventilation hole 70d and the second dust filter 68B. Further, a part of the air sucked into the seal inner space S8 is sucked into the seal inner space S2 in the end face seal 6C by way of the first dust filter 68A.

The seal lip 62 and the dust seal 70 are prevented from being made into surface contact with the flange part 64b of the slinger 64 and the outer circumferential part 61 c of the case 61 by a negative pressure, and further, since the seal lip 62 and the dust lip 70 receive close contact forces only by their axially bending reaction forces, their surface pressures are low, thereby it is possible to effectively prevent an increase in sliding load, early abrasion of the seal lip 62 and the dust lip 70 caused thereby and the like. Further, it is possible to eliminate the necessity of formation of a vent hole or the like in the housing 2 since the ventilation passage can be formed only by the ventilation hole 70d in the dust cover 6D.

Further, dust contained in the outside air sucked into the seal inner spaces S2, S8 is removed by the second dust filter 68B and the first dust filter 68A through the suction of the air, and accordingly, purified air is sucked into the seal inner spaces S2, S8. Thus, it is possible to prevent dust from entering into engine oil in the crank chamber through the sliding portion between the flange part 64rb of the slinger 64 and the seal lip 62.

Although the first dust filter 68A is worn through aging effect due to the sliding between itself and the fitting cylindrical part 64a of the slinger 64 on rotation, since the second dust filter 68B is stationary, it is never worn. Thus, an excellent dust removal function can be maintained.

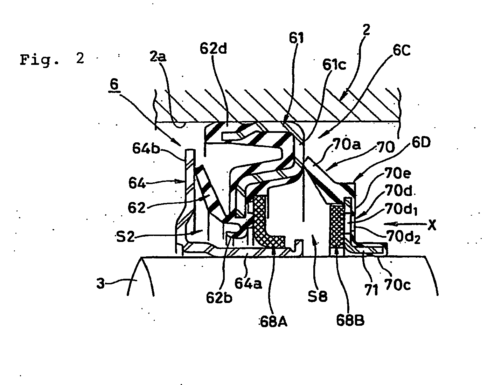

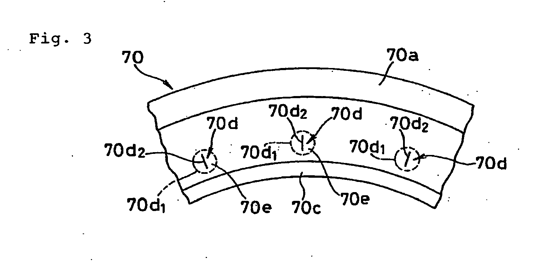

Next, Fig. 2 is a partly sectioned view which shows a variant form of the lip type end face sealing device in the first embodiment shown in Fig. 1, as stated above, the lip type end face sealing device being sectioned along a plane passing through the center axis, and Fig. 3 is a view as viewed in the direction of the arrow X in Fig. 2.

This lip type end face sealing device 6 has the same configuration as that shown in Fig. 1, except that the ventilation hole 70d in the dust cover D is formed in a slit-like shape. In detail, a rubber layer constituting the dust lip 70 is formed so as to have a relatively thin membrane like shape in the part which covers the atmospheric side of the reinforcing ring 71, and the ventilation hole 70d has an inner ventilation hole 70d₁ which pierces through the reinforcing ring 71 embedded in the dust cover 6D and which is formed in, for example, a circular hole-like shape as indicated by the broken line in Fig. 10, and an outer hole 70d₂ which pierces through the atmospheric side membrane-like rubber layer 70e, and which is formed in a slit-like shape.

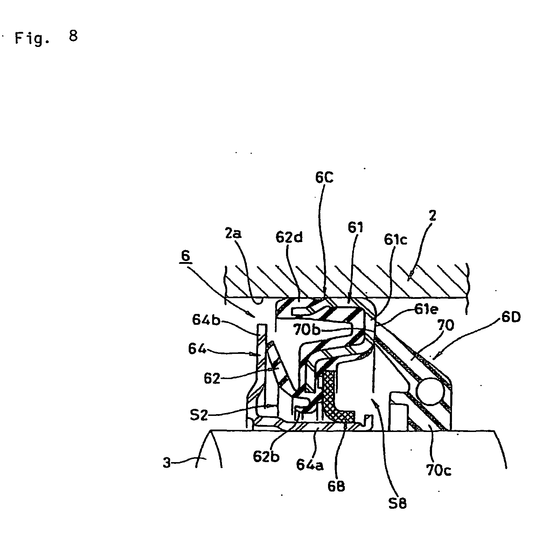

With this embodiment, since the ventilation hole 70d in the dust cover 6D has a slit-like shape in the outer ventilation hole 70d₂ formed in the rubber layer 70e, the outer ventilation hole 70d₂ is normally closed, and accordingly, when the rubber layer is deformed by a differential pressure between the atmospheric pressure and a negative pressure induced in the seal inner spaces S8, S2, the outer ventilation hole 70d₂ is slightly opened. That is, the second dust filter 68B positioned on the inside of the ventilation hole 70d is not always exposed to external dust, thereby it is possible to shut off entrance of dust having a large particle size. Accordingly, in addition to the advantages exhibited by the embodiment shown in Fig. 8, the dust removal function can be further enhanced, and further, it is possible to effect such an advantage that the second dust filter can hardly be clogged.

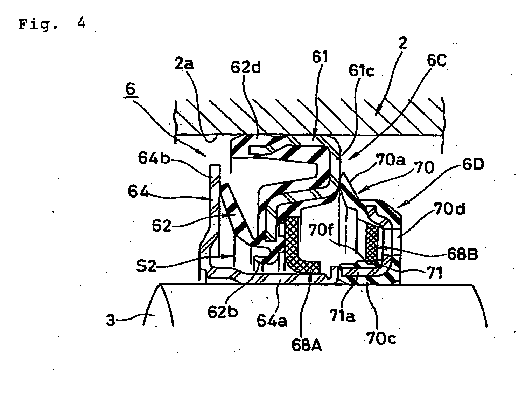

Next, Fig. 4 is a partly sectioned view which shows a variant form of the lip type end face sealing device in the first embodiment as shown in Fig. 1, as stated above, the lip type end face sealing device being sectioned along a plane passing through the center axis.

This lip type end face sealing device 6 has a configuration the same as that shown in Fig. 1, except the inner circumferential proximal end part 70c of the dust lip 70 in the dusts cover 6D is directed toward the fitting cylindrical part 64a of the slinger 64 in the end face seal 6C. The inner circumferential proximal end part 70c corresponds to the inner circumferential part of the dust cover stated in claim 5.

In detail, the inner circumferential proximal end part 70c of the dust lip 70 closely fitted on the outer circumferential surface of the crank shaft 3 is extended in a cylindrical shape so as to face toward the fitting cylindrical part 64a together with the inner circumferential part 71 a of the reinforcing ring 71 embedded therein, and the distal end face of the lip body part 70a of the dust lip 70 is made into close contact with the end face of the outer circumferential flange part 61 c of the case 61 in the end face seal 6C with a suitable surface pressure when the distal end part abuts against the end part of the fitting cylindrical part 64a. Further, in the end face seal 6c in an unfitted condition, the case 61 (seal lip 62) and the slinger 64 are positioned, relative to each other in the axial direction by a suitable removable auxiliary fixture (which is not shown).

Further, the outer circumferential surface of the inner circumferential proximal distal end part 70c of the dust seal 70 is formed therein with a fitting groove 70f, and the second dust filter 68B is fitted in the fitting groove 70f. That is, the second filter 68B is attached to the inside of the ventilation hole 70d through the fitting between itself and the fitting groove 70f without bonding.

Accordingly, with this configuration, upon the fitting on the outer circumferential surface of the crank shaft 3, the dust cover 6D can be simply positioned so that the distal end face 70b of the dust lip 70 is made into close contact with the outer circumferential flange part 61 c of the case 61 with a suitable surface pressure, by causing the distal end part of the inner circumferential proximal end part 70c of the dust lip 70 in the dust cover 6D to abut against the fitting cylindrical part 64a of the slinger 64.

Further, even in the embodiment shown in Fig. 4, the ventilation hole 70d is configured, similar to the configurations shown in Figs. 2 and 3.

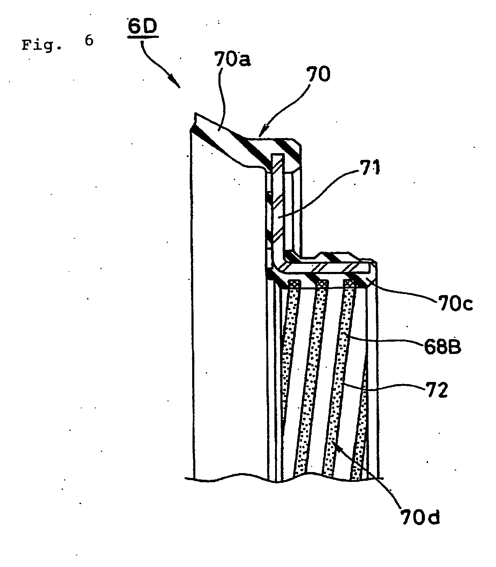

Next, Fig. 5 is a partly sectioned view which shows a further variant form of the lip type end face sealing device in the first embodiment shown in Fig. 1, as stated above, the lip type end face sealing device being sectioned along a plane passing through the center axis, and Fig. 6 is a partly sectioned view which shows a dust cover shown in Fig. 5, the dust cover being sectioned along a plane passing through the center axis.

This lip type end face sealing device basically has the same configuration as that shown in Fig. 1, except that the ventilation passage is spirally extended in the fitted part of the inner circumferential proximal end part 70c of the dust cover 6D, which is fitted on the crank shaft 3.

In detail, as shown in Fig. 6, in the dust cover 6D, an inner circumferential proximal end part 70c closely fitted on the outer circumferential surface of the crank shaft 3 is formed in its inner peripheral surface with a groove (which will be referred to as "spiral groove" as shown in Fig. 6) 72 which spirally connect between the atmospheric side end part and the seal inner space S8 side end part, and the spiral groove 72 is charged therein with the second dust filter 68B. The second dust filter 68B is made of a fiber assembly or a felt such as a synthetic fiber fabric or cotton, having a permeability due to micro gaps among the fibers. Further, it is secured by an adhesive.

The end faced seal 6C has a configuration similar to that shown in Fig. 1, and is adapted to prevent engine oil in the crank chamber of the engine from leaking outside of the engine, through the sliding portion between the seal lip 62 and the flange part 64b of the slinger 64. The air presented in the seal inner space S2 in the end face seal 6C is expelled toward the outer circumference side through the sliding portion between the flange part 64b of the slinger 64 and the seal lip 62 under a centrifugal force caused by rotation in the sliding portion between the flange part 64b of the slinger 64 and the seal lip 62 or pumping action by the spiral grooves formed in the sliding portion. Further, the air presented in the seal inner space S8 between the end face seal 6C and the dust cover 6D is also expelled toward the outer circumference side under a centrifugal caused by rotation in the sliding portion in the dust seal 70. Further, due to the above-mentioned air expelling action, the outside air is sucked into the seal inner space S8 by way of the ventilation hole 70d composed of the spiral groove 72 and the second dust filter 68B charged therein. Further, a part of the air sucked into the seal inner space S8 is sucked in to the seal inner space S2 in the end face seal 6C by way of the first dust filter 68A.

Accordingly, it is possible to prevent the seal lip 62 and the dust lip 70 from being made into surface contact with the flange part 64b of the slinger 64 and the outer peripheral flange part 61 c of the case 61 by a negative pressure, thereby it is possible to effectively prevent an increase in sliding load, early abrasion of the seal lip 62 cased thereby and the dust lip 70 and the like.

Further, dust contained in the outside air sucked in to the seal inner spaces S8, S2 is removed by the second dust filter 68B and the first dust filter 68A during suction of the air. Further, since the ventilation hole 70d formed in the inner circumferential proximal end part 70c of the dust cover 6D and the second dust filter 68B are extended spirally by a long length, the dust removal effect becomes higher. Accordingly, purified air alone is sucked in the seal inner space S2, thereby it is possible to prevent dust from entering into engine oil in the crank chamber through the sliding portion between the flange part 64b of the slinger 64 and the seal lip 62.

It is noted that since the second dust filter 68B is appropriately compressed by a predetermined interference of the inner circumferential distal end part 70c of the dust cover 6D with respect to the crank shaft 3, it may be made of fibers with a more or less coarse density.

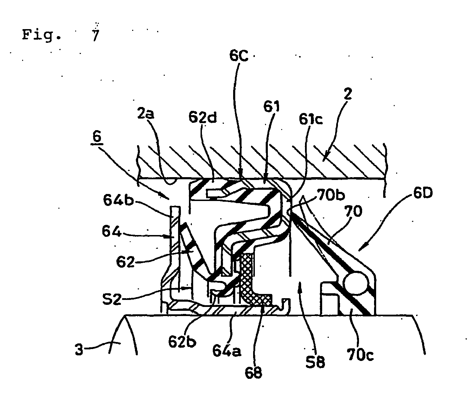

Next, Fig. 7 is a partly sectioned view which shows a lip type end face sealing device in a second embodiment of the present invention which is applied as a sealing means between engine oil and the atmospheric air in an engine used in a sever outside dust environment, and an end face seal 6C has a configuration similar to that shown in Fig. 1.

The dust cover 6D is formed in an annular shape and made of a rubber-like elastic material, similar to the seal lip 62, having an inner circumferential surface of a thick wall distal end part 70 which is closely fitted on the outer circumferential surface of the crank shaft 3 on the atmospheric side from the fitting cylindrical part 64a of the slinger 64, and a distal end face 70b of the dust lip 70 which is flared in a taper-like fashion, facing toward the end face seal 6C, is made into slidable and close contact with the end face of the outer circumferential flange part 61 c of the case 61 in the end face seal 6C.

The dust cover 6D rotated together with the crank shaft 3 is exerted thereto with a centrifugal force caused by rotation so that the dust lip 70 is deformed to enlarge its diameter. Further, the rigidity and the mass of the dust seal lip 70 are set so that, at a speed higher than a predetermined rotational speed, the distal end face 70b of the dust lip 70 which is deformed to enlarge its diameter due to increase in centrifugal force is separated from the end face of the outer circumferential flange part 61 c of the case 61 in the end face seal 6C, as indicated by the one-dot chain line in Fig. 7.

With the configuration as stated above, the end face seal 6C is adapted to prevent engine oil in the crank chamber in the engine from leaking outside the engine, similar to that shown in Fig. 1. It is noted here that a centrifugal force which acts to deform the dust lip 70 of the dust cover 6D rotated together with the crank shaft 3, so as to enlarge the diameter of the dust lip 70, is small, and a centrifugal force acting upon the air in the seal inner spaces S2, S8 is also small. Thus, no such a large expelling force as to forcibly open the seal lip 62 and the dust lip 70 is induced, and accordingly, the seal lip 70 is made into close and slidable contact with the end face of the outer circumferential flange part 61 c of the case 61 in the end face seal 6C, thereby the entrance of dust from the atmospheric side is shut off.

Further, if the rotational speed of the crank shaft 3 is increased from the above-mentioned condition, although the air expelling force caused by the centrifugal force acting upon the air and the pumping action of the spiral grooves formed in the slide portion between the seal lip 62 and the flange part 64b of the slinger 64, becomes large, since the centrifugal force acting upon the dust lip 70 of the dust cover 6D which is rotated together with the crank shaft 3, is also increased, the dust lip 70 is deformed as indicated by the one-dot chain line in Fig. 7 so as to cause the distal end face 70b to slightly separate from the end face of the outer circumferential flange part 61 c of the case 61 in the end face seal 6C, thereby it is possible to prevent a negative pressure from inducing in the seal inner spaces S2, S8. Thus, it is possible to prevent the seal lip 62 and the dust lip 70 from being made into surface contact with the flange part 64b of the slinger 64 and the outer circumferential flange part 61c of the case 61 due to a negative pressure. Thus, it is possible to effectively prevent an increase in sliding load, early abrasion of the seal lip 62 and the dust lip 70 cased thereby and the like.

Further, in the case of this condition, the outside air is sucked into the seal inner space S8 through a slight gap defined between the distal end face 70b of the dust lip 70 and the outer circumferential flange part 1c of the case 61, and is then sucked into the seal inner space S2 in the end face seal 6D, and accordingly, dust in the air is removed from the dust filter 68. Accordingly, since purified air alone is sucked into the seal inner space S2, it is possible to prevent dust from entering into engine oil in the crank chamber through the sliding portion between the flange part 64b of the slinger 64 and the seal lip 62.

Incidentally, in order to ensure the above-mentioned operation for the dust lip 70, weights for increasing a diameter enlarging force under centrifugal force may be embedded in the outer circumferential part of the dust lip 70 at equal intervals in the circumferential direction. Alternatively, thin wall parts for readily enlarging the diameter of the dust lip 70 may be formed in the dust lip 70 at equal intervals in the circumferential direction.

Next, Fig. 8 is a partly sectioned view which shows a lip type end face sealing device in a third embodiment of the present invention, adapted to be applied as a sealing means between engine oil and the atmospheric air in an engine used in a severe environment, the lip type end face sealing device being sectioned along a plane passing through the center axis, and an end face seal 6C has a configuration similar to that shown in Fig. 1.

The dust cover 6D is basically similar to that shown in Fig. 7, that is, the inner circumferential surface of a thick wall proximal end part 70 is closely fitted on the outer circumferential surface of the crank shaft, being off from the fitting cylindrical part 64a of the slinger 64 toward the atmospheric side, an the distal end face 70b of the dust lip 70 which is flared in a taper-like fashion, facing toward the end face seal 6C, is made into slidable and close contact with the end face of the outer circumferential flange part 61 c of the case 61 in the end face seal 6C. Further, the dust seal 70 has a sufficiently thick wall in comparison with that shown in Fig. 7, as stated above, and accordingly, its sliding width on the end face 61 e of the outer circumferential flange part 61c of the case 61 in the end face seal 6C, or, in other words, the diametrical width of the distal end face 70b of the dust lip 70 is relatively large.

Of the end face 61 e of the outer circumferential flange part 61 c of the case 61 in the end face seal 6C and the distal end face 70b of the dust lip 70 which is made into slidable contact with the former, either one or both is surface-roughened by a satin treatment. Thus, an unlimited number of fine ventilation passages (which are not shown) which are labyrinth-like are defined between the end face 61e and the distal end face 70b which are made into contact with each other.

With the configuration as stated above, similar to that shown in Fig. 1, the end face seal 6C is adapted to prevent engine oil in the crank chamber of the engine from leaking outside of the engine through the sliding portion between the seal lip 62 and the flange part 64b of the slinger 64, and accordingly, the air presented in the seal inner space S2 is expelled toward the outer circumference side from the sliding portion under a centrifugal force caused by rotation in the sliding portion between the flange part 64b of the slinger 64 and the seal lip 62 or the pumping action by the spiral grooves formed in the sliding portion. However, the seal inner space S2 is opened to the atmosphere by way of the unlimited number of fine ventilation passages which are labyrinth-like and which are formed in the sliding portion between the end face 61e of the outer circumferential flange part 61 c of the case 61 and the distal end face 70b of the dust lip 70, and accordingly, no remarkable negative pressure is effected in the seal inner spaces S2, S8 under the above-mentioned air expelling action. Thus, it is possible to prevent the seal lip 62 and the dust lip 70 from being made into surface contact with the flange part 64b of the slinger 64 and the outer circumferential flange part 61c of the case 61 by a negative pressure, thereby it is possible to effectively prevent an increase in sliding load, and early abrasion of the seal lip 62 and the dust seal 70 caused thereby and the like.

Further, the above-mentioned air expelling action causes introduction of the outside air into the seal inner space S8 inside of the dust cover 6D through the unlimited number of labyrinth-like ventilation passages in the sliding portion between the end face 61 e of the outer circumferential flange part 61 c of the case 61 and the distal end face 70b of the dust lip 70. Since these ventilation passages are formed by a satin treatment so as to be fine and labyrinth-like, dust contained in the sucked air can hardly pass into the seal inner space S8. Further, even though dust is contained in the air flowing into the seal inner space S8, the dust is removed by the dust filter 68 during suction of air into the seal inner space S2 in the end face seal 6C. Thus, purified air alone is sucked into the seal inner space S2, thereby it is possible to prevent dust entering into engine oil in the crank chamber through the sliding portion between the flange part 64b of the slinger 64 and the seal lip 62.

## Claims

1. A lip type end-face sealing device, comprising a seal lip (62) which is integrally provided on an annular case (61) fixed onto the inner circumferential surface (2a) of a housing (2), and open in a taper-fashion toward the sealing object liquid side, a slinger (64) which is tightly fitted onto the outer circumference of a rotational shaft (3) inserted into the inner circumference of said housing (2), and is slidably brought into contact with said seal lip (62) at a flange (64b) of said slinger (64), and a dust cover (6D) which is tightly fitted at the atmospheric-air side of said slinger (64) on the outer circumference of said rotational shaft (3) and has a dust lip (70) on to outer circumference which is slidably brought into slide contact with said case (61),
**characterized in that**
(i) said dust cover (6D) includes a reinforcing ring (71) embedded in an inner circumferential proximal end part (70c) of said dust lip (70) and on said dust cover (6D) and the embedded reinforcing ring (71) a ventilation passage (70d) is formed which releases pressure in the seal inner spaces (S2, S8) between sliding parts of said seal lip (62) and said dust lip (70) toward the atmospheric-air side, and a dust filter (68, 68A, 68B) is provided in said ventilation passage (70d), or
(ii) the rigidity and the mass of said dust lip (70) are set in such a manner that at a speed higher than a predetermined rotational speed a distal end face (70b) of the dust lip (70), which is deformed to enlarge its diameter due to increase in centrifugal force, is separated from said case (61), or
(iii) at least one of said dust lip (70) and case (61) which are slidably brought into contact with each other is roughened to define an unlimited number of fine, labyrinth-like ventilation passages between an end face (61 e) of the case (61) and a distal end face (70b) of the dust lip (70).

2. The lip type end-face sealing device according to claim 1(i), wherein the ventilation passage (70d) is formed in a slit-like shape at the part (70d₂) which penetrates a rubber layer (70e) of the dust lip (70).

3. The lip type end-face sealing device according to claim 1(i), wherein said ventilation passage (70d) extends spirally along the fitting part between said rotational shaft (3) and the inner circumference (70c) of said dust cover (6D)

4. The lip type end-face sealing device according to claim 1 (i), wherein the inner circumference (70c) of said dust cover (6D) is positioned by being brought into contact with the end portion on the atmosphere side of said slinger (64).

## Patentansprüche

1. Wellendichtring, der eine Dichtungslippe (62), die integral an einer an der Innenumfangsoberfläche (2a) eines Gehäuses (2) fixierten ringförmigen Ummantelung (61) vorgesehen und hin zur Seite einer abzudichtenden Flüssigkeit konusartig offen ausgeführt ist, einen Ölschleuderring (64), der am Außenumfang einer in den Innenumfang des Gehäuses (2) eingesetzten drehbaren Welle (3) in enger Passung vorgesehen ist und an einem Flansch (64b) des Ölschleuderrings (64) gleitend in Kontakt mit der Dichtungslippe (62) gebracht wird, sowie eine Staubabdeckung (6D), die auf der Umgebungsluftseite des Ölschleuderrings (64) am Außenumfang der drehbaren Welle (3) in enger Passung vorgesehen ist und an ihrem Außenumfang eine Staublippe (70) hat, die gleitend in Gleitkontakt mit der Ummantelung (61) gebracht wird, umfasst,
**dadurch gekennzeichnet, dass**
(i) die Staubabdeckung (6D) einen in ein proximales Innenumfangsendteil (70c) der Staublippe (70) eingebetteten Verstärkungsring (71) beinhaltet, dass an der Staubabdeckung (6D) und dem eingebetteten Verstärkungsring (71) ein Belüftungsdurchgang (70d) ausgebildet ist, um Druck in den Dichtungsinnenräumen (S2, S8) zwischen gleitenden Teilen der Dichtungslippe (62) und der Staublippe (70) hin zur Umgebungsluftseite freizusetzen, und dass ein Staubfilter (68, 68A, 68B) im Belüftungsdurchgang (70d) vorgesehen ist, oder
(ii) die Steifigkeit und die Masse der Staublippe (70) so festgelegt sind, dass bei einer Drehzahl, die über einer vorbestimmten Umdrehungsgeschwindigkeit liegt, eine distale Endfläche (70b) der Staublippe (70), die verformt wird, um ihren Durchmesser aufgrund einer Erhöhung der Zentrifugalkraft zu vergrößern, von der Ummantelung (61) getrennt wird, oder dass
(iii) mindestens die Staublippe (70) oder die Ummantelung (61), die gleitend in Kontakt miteinander gebracht werden, angeraut ist, um eine unbegrenzte Anzahl feiner, labyrinthähnlicher Belüftungsdurchgänge zwischen einer Endfläche (61e) der Ummantelung (61) und einer distalen Endfläche (70b) der Staublippe (70) zu definieren.

2. Wellendichtring nach Anspruch 1(i), bei dem der Belüftungsdurchgang (70d) in einer schlitzähnlichen Form am Teil (70d₂), das durch eine Gummischicht (70e) der Staublippe (70) verläuft, ausgebildet ist.

3. Wellendichtring nach Anspruch 1(i), bei dem der Belüftungsdurchgang (70d) spiralförmig entlang dem Anschlussteil zwischen der drehbaren Welle (3) und dem Innenumfang (70c) der Staubabdeckung (6D) verläuft.

4. Wellendichtring nach Anspruch 1(i), bei dem der Innenumfang (70c) der Staubabdeckung (6D) **dadurch** positioniert ist, dass er in Kontakt mit dem Endabschnitt auf der Umgebungsluftseite des Ölschleuderrings (64) gebracht wird.

## Revendications

1. Dispositif d'étanchéité à lèvre pour face terminale, comportant une lèvre (62) d'étanchéité installée de façon intégrée sur une enveloppe annulaire (61) fixée sur la surface circonférentielle intérieure (2a) d'un logement (2) et s'ouvrant de façon conique vers le côté "liquide" de l'objet d'étanchéité, un déflecteur centrifuge (64) ajusté avec serrage sur la circonférence extérieure d'un arbre rotatif (3) inséré dans la circonférence intérieure dudit logement (2) et amené par glissement au contact de ladite lèvre (62) d'étanchéité au niveau d'un flasque (64b) dudit déflecteur centrifuge (64), et un couvercle anti-poussière (6D) ajusté avec serrage du côté "air atmosphérique" dudit déflecteur centrifuge (64) sur la circonférence extérieure dudit arbre rotatif (3) et doté, sur sa circonférence extérieure, d'une lèvre anti-poussière (70) qui est amenée par glissement en contact glissant avec ladite enveloppe (61),
**caractérisé en ce que**.
(i) ledit couvercle anti-poussière (6D) comprend une bague (71) de renfort encastrée dans une partie (70c) d'extrémité proximale circonférentielle intérieure de ladite lèvre anti-poussière (70) et **en ce que**, sur ledit couvercle anti-poussière (6D) et sur la bague (71) de renfort encastrée, un passage (70d) de ventilation est formé qui relâche la pression dans l'espace intérieur (S2, S8) du joint entre des parties en glissement de ladite lèvre (62) d'étanchéité et de ladite lèvre anti-poussière (70) vers le côté "air atmosphérique", et **en ce qu'**un filtre (68, 68A, 68B) est installé dans ledit passage (70d) de ventilation, ou
(ii) la rigidité et la masse de ladite lèvre anti-poussière (70) sont fixées de telle sorte qu'à une vitesse supérieure à une vitesse de rotation prédéterminée, une face (70b) d'extrémité distale de la lèvre anti-poussière (70), qui est déformée de façon à agrandir son diamètre du fait d'un accroissement de la force centrifuge, est séparée de ladite enveloppe (61), ou
(iii) ladite lèvre anti-poussière (70) et / ou ladite enveloppe (61) amenées en contact par glissement sont rendues rugueuses afin de définir un nombre illimité de passages de ventilation fins semblables à des labyrinthes entre une face terminale (61e) de l'enveloppe (61) et une face (70b) d'extrémité distale de la lèvre anti-poussière (70).

2. Dispositif d'étanchéité à lèvre pour face terminale selon la revendication 1(i), le passage (70d) de ventilation étant formé avec une configuration en fente au niveau de la partie (70d₂) qui pénètre dans une couche (70e) de caoutchouc de la lèvre anti-poussière (70).

3. Dispositif d'étanchéité à lèvre pour face terminale selon la revendication 1(i), ledit passage (70d) de ventilation s'étendant en spirale le long de la partie ajustée entre ledit arbre rotatif (3) et la circonférence intérieure (70c) dudit couvercle anti-poussière (6D).

4. Dispositif d'étanchéité à lèvre pour face terminale selon la revendication 1(i), la circonférence intérieure (70c) dudit couvercle anti-poussière (6D) étant positionnée en étant amenée au contact de la partie terminale du côté "atmosphère" dudit déflecteur centrifuge (64).
